Europäisches Patentamt

European Patent Office

Office européen des brevets

(19)

(11) Veröffentlichungsnummer: **0 049 438**
B1

(12) # EUROPÄISCHE PATENTSCHRIFT

(45) Veröffentlichungstag der Patentschrift:
20.06.84

(51) Int. Cl.³: **G 21 C 19/06**, G 21 F 5/00

(21) Anmeldenummer: 81107655.3

(22) Anmeldetag: 26.09.81

(54) Verfahren und Vorrichtung zum Lagern von Behältern für radioaktive Stoffe.

(30) Priorität: 02.10.80 DE 3037178

(43) Veröffentlichungstag der Anmeldung:
14.04.82 Patentblatt 82/15

(45) Bekanntmachung des Hinweises auf die Patenterteilung:
20.06.84 Patentblatt 84/25

(84) Benannte Vertragsstaaten:
BE CH DE FR GB LI SE

(56) Entgegenhaltungen:
DE - A - 2 300 620
FR - A - 1 353 100
FR - A - 2 384 325
FR - A - 2 449 952
GB - A - 2 046 162

ATOMKERNENERGIE-KERNTECHNIK, Band 35, Nr. 2,
1980, MÜNCHEN (DE) W. HAME et al.: "Inhärent sichere
Luftkühlung bei der Lagerung selbsterhitzender
Radionuklidkonfigurationen", Seiten 111-122

(73) Patentinhaber: TRANSNUKLEAR GmbH,
Postfach 11 00 30 Rodenbacher Chaussee 6,
D-6450 Hanau 11 (DE)

(72) Erfinder: Rudolph, Werner, Dr.,Dipl.-Chem.,
Ulmenstrasse 4, D-6460 Gelnhausen (DE)
Erfinder: Anspach, Walter, Dipl.-Ing., Grünaustrasse 11,
D-6450 Hanau 9 (DE)
Erfinder: Christ, Richard, Dr., Dipl.-Ing.,
August-Bebel-Strasse 20, D-6454 Bruchköbel (DE)
Erfinder: Kroll, Hartmut, Dipl.-Phys., Gaussstrasse 6,
D-6450 Hanau (DE)

## Beschreibung

Gegenstand der Erfindung ist ein Verfahren zum gasgekühlten kontrollierten Lagern von mit Abschirmung, Dichtungselementen, Deckelsystem und dichtem Behälterkörper versehenen Behältern für radioaktive Stoffe im direkten Gasstrom, insbesondere zum luftgekühlten Lagern von Transport- und Lagerbehältern für bestrahlte Brennelemente aus Kernreaktoren, sowie eine Vorrichtung zur Durchführung des Verfahrens.

Bestrahlte bzw. abgebrannte Brennelemente sowie radioaktiver Abfall müssen bis zur Wiederaufarbeitung oder bis zur Endbeseitigung zwischengelagert werden. Die Lagerung erfolgt im allgemeinen in Wasserbecken mit Wasser als Kühlmedium. Seit einiger Zeit wird jedoch die Zwischenlagerung mit Luftkühlung, vor allem mittels Naturzug, vorgeschlagen (DE-A Nrn. 2906629, DE-A 2913540, DE-A 2711405). Der Nachteil derartiger Lager ist jedoch, dass der Kühlluftstrom mit radioaktiven Verunreinigungen, die aus Leckagen des Lagergutcontainments, also aus den Behältern herrühren, beladen sein kann. Diese Aktivität wird mit der den Behälter umströmenden Kühlluft verdünnt und gelangt in die Umgebung. Emissionsüberwachung und -bilanzierung sind sehr erschwert. Teilweise wird die mit Radioaktivität beladene Kühlluft über Filteranlagen geführt, die wegen der grossen Kühlluftdurchsätze aufwendig gestaltet sein müssen und in ihrer Wirkungsweise in diesen Ausmassen nicht problemlos sind. Es sind auch Behälter mit dichtem Behälterkörper vorgeschlagen worden, bei denen Leckagen über das Dichtungssystem zwischen Behälterkörper und Deckel durch die Messung von Druckveränderungen festgestellt werden können. Eine Überwachung auch der Art der Aktivität und eine Aktivitätsbilanzierung sind jedoch nicht möglich.

Der Erfindung lag daher die Aufgabe zugrunde, ein Verfahren zum gasgekühlten kontrollierten Lagern von mit Abschirmung, Dichtungselementen, Deckelsystem und dichtem Behälterkörper versehenen Behältern für radioaktive Stoffe in direktem Gasstrom zu finden, insbesondere zum luftgekühlten Lagern von Transport- und Lagerbehältern für bestrahlte Brennelemente aus Kernreaktoren, mit dem eine Überwachung auch der Art der Radioaktivität sowie eine Aktivitätsbilanzierung bei Leckagen sichergestellt wird und das den bisherigen Aktivitätsrückhalteaufwand reduziert. Ferner sollte auch eine Vorrichtung zur Durchführung dieses Verfahrens geschaffen werden.

Diese Aufgabe wurde erfindungsgemäss dadurch gelöst, dass ein Teilgasstrom getrennt von Kühlgasstrom, der nur den Behälterkörper kühlt, über die Dichtungselemente der Behälter geführt und überwacht wird, während der Kühlgasstrom von den Dichtungselementen der Behälter ferngehalten wird. Vorteilhafterweise wird der Teilgasstrom angesaugt und für jeden Behälter getrennt überwacht.

Anhand der schematischen Abbildungen I bis III ist das erfindungsgemässe Verfahren beispielhaft näher erläutert.

In einem luftgekühlten Zwischenlager stehen Behälter 1, deren mit Kühlrippen 20 versehene Grundkörper 16 aus dichtem Material leckagesicher gefertigt sind. Die Behälter 1 enthalten radioaktives Lagergut 2 und sind mit einem Deckel 9 verschlossen. Auf den Behältern 1 befindet sich jeweils ein Aufsatz 3, der den Bereich der Dichtungselemente 7, die den Behälterkörper 16 gegen den Deckel 9 abdichten, abdeckt. Der Aufsatz 3 enthält eine Luftzuführungsöffnung 4 und eine Luftabführungsöffnung 5 mit Anschlussmöglichkeiten für Rohrleitungen 13.

Ein grösserer Teilstrom 18 der einströmenden Luft im Zwischenlager 17 kühlt die Behälter 1 durch Konvektion im Naturzug, steigt unkontaminiert empor und gelangt gegebenenfalls über einen Kamin 21 ohne besondere Abluftvorkehrungen ins Freie.

Ein kleiner Teilluftstrom 19 jedoch strömt durch die Luftzuführungsöffnung 4 in das Innere 10 des Aufsatzes 3, umspült dabei die Dichtungselemente 7 und verlässt den Aufsatz 3 durch die Luftabführungsöffnung 5, passiert eine mit der Luftabführungsöffnung 5 verbundene Leitung 13 und gelangt schliesslich über eine Messeinrichtung 14 und über Rückhalteeinrichtungen 15, beispielsweise aus geeigneten Filtern und Wäschern bestehend, ebenfalls ins Freie. Umspült der Teilluftstrom 19 Dichtungselemente 7, die eine Leckage aufweisen, werden die radioaktiven Leckagegase mit dem Teilluftstrom 19 ebenfalls über die Messeinrichtung 14 transportiert, indentifiziert, bilanziert und anschliessend in den Rückhalteeinrichtungen 15 gereinigt. Da der Teilluftstrom 19 sehr gering ist, können die Rückhalteeinrichtungen 15 klein, wenig aufwendig und daher wenig störanfällig ausgelegt werden. Die Rohrleitungen 13 aller Behälter 1 können als Sammelleitung 22 zur Messeinrichtung 14 geführt werden. Es ist jedoch besonders günstig, wenn die Überwachung des Teilluftstromes 19 für jeden Behälter 1 getrennt erfolgt. Die Überwachung der Behälter 1 kann gegebenenfalls auch in bestimmten Zeitintervallen nacheinander durchgeführt werden. Die Luftzu- 4 und -abfuhröffnungen 5 sind als Anschlüsse in der Art von Prüfanschlüssen ausgebildet.

Besonders günstig ist es, wenn der Teilluftstrom 19 angesaugt wird, ferner ganz oder teilweise im Kreislauf zurückgeführt wird z.B. unter Verwendung einer Zuführungsleitung 25 und der Leitung 13.

Normalerweise verwendet man für den Teilgasstrom Luft aus der Kühlluft. Vorteilhaft ist es in manchen Fällen jedoch, wenn der Teilgasstrom 19 aus Inertgas besteht, das man gesondert zuführt.

Die erfindungsgemässe Vorrichtung ist dadurch gekennzeichnet, dass die Behälter 1 jeweils durch einen Aufsatz 3 mit Schutzfunktion, der eine Gaszuführungsöffnung 4 und eine Gasabführungsöffnung 5 sowie einen Innenraum 10 enthält, im Bereich von Dichtungselementen 7, die den Behälter 1 gegen einen Deckel 9 abdichten, abgedeckt sind und die Gasabführungsöffnung 5 über eine Leitung 13 mit Mess- 14 und Rückhalteeinrichtungen 15 verbunden ist.

Dabei ist besonders vorteilhaft, wenn statt des die Dichtungselemente 7 abdeckenden Aufsatzes ein Schutzdeckel mit verschliessbaren Gaszuführungen 11 und Gasabführungen 12 und Dichtungselementen 8 vorgesehen ist.

Der Aufsatz 3 ist gegen den Behälter 1 mit Dichtungen 24 abgedichtet, jedoch kann in den meisten Fällen auf diese Dichtung verzichtet werden. Die Stirnseite 23 des Aufsatzes 3 ist so ausgebildet, dass die Wucht seitlich oder von oben auf ihn herabfallender Gegenstände gedämpft werden.

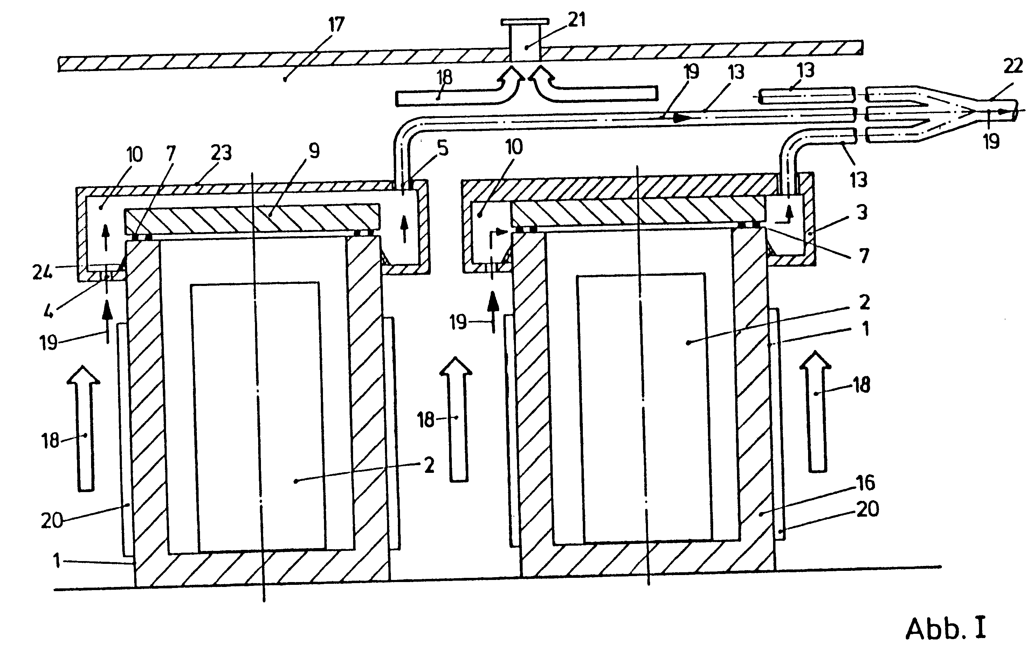

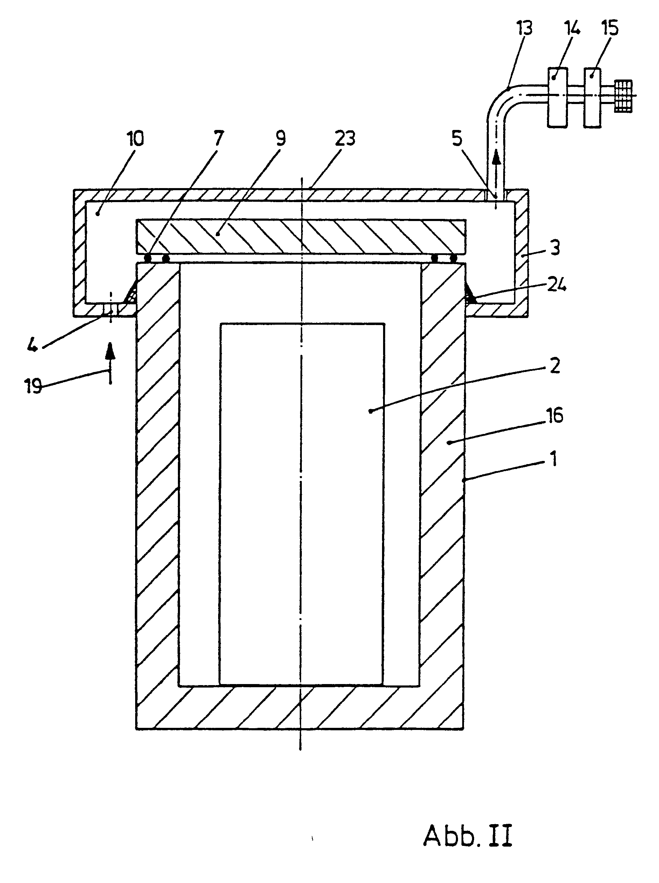

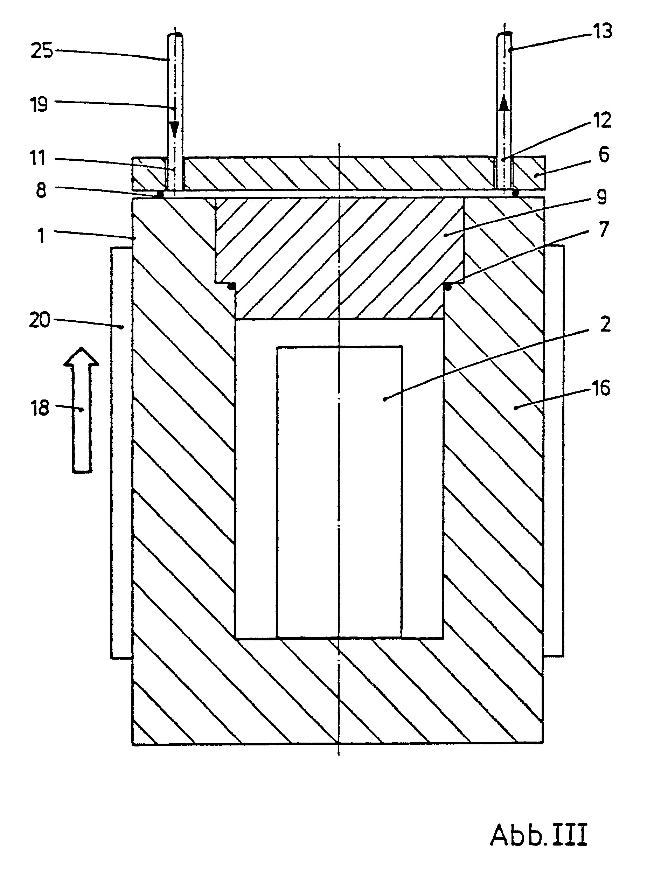

## Patentansprüche

1. Verfahren zum gasgekühlten kontrollierten Lagern von mit Abschirmung, Dichtungselementen, Deckelsystem und dichtem Behälterkörper versehenen Behältern für radioaktive Stoffe im direkten Gasstrom, insbesondere zum luftgekühlten Lagern von Transport- und Lagerbehältern für bestrahlte Brennelemente aus Kernreaktoren, dadurch gekennzeichnet, dass ein Teilgasstrom getrennt vom Kühlgasstrom, der nur den Behälterkörper kühlt, über die Dichtungselemente der Behälter geführt und überwacht wird, während der Kühlgasstrom von den Dichtungselementen der Behälter ferngehalten wird.

2. Verfahren nach Anspruch 1, dadurch gekennzeichnet, dass der Teilgasstrom angesaugt wird.

3. Verfahren nach den Ansprüchen 1 und 2, dadurch gekennzeichnet, dass die Überwachung des Teilgasstromes für jeden Behälter getrennt erfolgt.

4. Verfahren nach den Ansprüchen 1 bis 3, dadurch gekennzeichnet, dass der Teilgasstrom ganz oder teilweise im Kreislauf zurückgeführt wird.

5. Verfahren nach den Ansprüchen 1 bis 4, dadurch gekennzeichnet, dass der Teilgasstrom aus Inertgas und der Kühlgasstrom aus Luft besteht.

6. Vorrichtung zur Durchführung des Verfahrens nach den Ansprüchen 1 bis 5, bestehend aus einem gasgekühlten kontrollierten Lager von mit Abschirmung, Dichtungselementen, Deckelsystem und dichtem Behälterkörper versehenen Behältern für radioaktive Stoffe, insbesondere von Transport- und Lagerbehältern für bestrahlte Brennelemente aus Kernreaktoren, dadurch gekennzeichnet, dass die Behälter (1) jeweils durch einen Aufsatz (3) mit Schutzfunktion, der eine Gaszuführungsöffnung (4) und eine Gasabführungsöffnung (5) sowie einen Innenraum (10) enthält, im Bereich von Dichtungselementen (7), die den Behälter (1) gegen einen Deckel (9) abdichten, abgedeckt sind, und die Gasabführungsöffnung (5) über eine Leitung (13) mit Mess- (14) und Rückhalteeinrichtungen (15) verbunden ist.

7. Vorrichtung nach Anspruch 6, dadurch gekennzeichnet, dass statt des die Dichtungselemente (7) abdeckenden Aufsatzes (3) ein weiterer Deckel (6) mit verschliessbaren Gaszuführungs- (11) und Gasabführungsöffnungen (12) und Dichtungselementen (8) vorgesehen ist.

## Claims

1. A process for the gas-cooled controlled storage of containers for radioactive materials in a direct stream of gas, having a screen, sealing elements, a cover system and an air-tight container body, in particular for the air-cooled storage of transport and storage containers for radiation-exposed fuel elements from nuclear reactors, characterised in that a partial stream of gas, separate from the cooling stream of gas which only cools the container body, is passed over the sealing elements of the container and is monitored while the cooling stream of gas is kept away from the sealing elements of the container.

2. A process according to claim 1, characterised in that the partial stream of gas is drawn in by suction.

3. A process according to claims 1 and 2, characterised in that control of the partial stream of gas is monitored separately for each container.

4. A process according to claims 1 to 3, characterised in that the partial stream of gas partially or completely recycled.

5. A process according to claims 1 to 4, characterised in that the partial stream of gas consists of inert gas and the cooling stream of gas consists of air.

6. An apparatus to carry out the process according to claims 1 to 5, consisting of a gas cooled controlled store for containers for radioactive materials having a screen, sealing elements, a cover system and an air-tight container body, in particular for transport and storage containers for radiation-exposed fuel elements from nuclear reactors, characterised in that the containers (1) are covered in each case by a cap (3) which has a protective function, and which contains a gas-inlet opening (4) and a gas-outlet opening (5) in addition to an inner chamber (10) in the area sealing elements (7) which seal off the container (1) with respect to a cover (9), and the gas-outlet opening (5) is connected to measuring apparatus (14) and retention apparatus (15) via a pipe (13).

7. An apparatus according to claim 6, characterised in that a further cover (6) having gas-inlet openings (11) and gas-outlet openings (12) which may be sealed and sealing elements (8) is provided instead of the cap (3) covering the sealing elements (7).

## Revendications

1. Procédé pour un dépôt contrôlé, refroidi par un gaz, de récipients pour matières radioactives, placés dans un courant de gaz direct, et qui sont pourvus d'un blindage, d'éléments d'étanchéité, d'un système de couvercle et de corps étanches, en particulier pour le stockage refroidi à l'air des récipients de transport et de stockage des éléments combustibles irradiés des réacteurs nucléaires, procédé caractérisé en ce qu'un courant partiel de gaz, séparé du courant de gaz de refroidissement qui refroidit seulement le corps du récipient, passe sur les éléments d'étanchéité de ce récipient et est surveillé, pendant que le courant de gaz de refroidissement est maintenu à l'écart des éléments d'étanchéité du récipient.

2. Procédé suivant la revendication 1, caractérisé en ce que le courant partiel de gaz est aspiré.

3. Procédé suivant les revendications 1 et 2, caractérisé en ce que la surveillance du courant partiel de gaz se fait séparément pour chaque récipient.

4. Procédé suivant les revendications 1 à 3, caractérisé en ce que le courant partiel de gaz est retourné totalement ou partiellement dans le circuit.

5. Procédé suivant les revendications 1 à 4, caractérisé en ce que le courant partiel de gaz est constitué par un gaz inerte et le courant d'air de refroidissement par de l'air.

6. Procédé pour l'exécution du procédé suivant les revendications 1 à 5, constitué par un procédé pour un dépôt contrôlé, refroidi par un gaz, de récipients pour matières radioactives, et qui sont pourvus d'un blindage, d'éléments d'étanchéité, d'un système de couvercle et de corps étanches, en particulier pour le stockage refroidi à l'air des récipients de transport et de stockage des éléments combustibles irradiés des réacteurs nucléaires, caractérisé en ce que les récipients (1) sont recouverts d'un couronnement (3) ayant une fonction de protection, qui contient un orifice d'alimentation en gaz (4) et un orifice d'évacuation de gaz (5), ainsi qu'un espace intérieur (10) dans la zone des éléments d'étanchéité (7) qui rendent étanche le récipient (1) par rapport à un couvercle (9), l'orifice (5) d'évacuation du gaz étant relié par une conduite (13) avec l'appareil de mesure (14) et les dispositifs de retenue (15).

7. Dispositif suivant la revendication 6, caractérisé en ce que, au lieu du couronnement (3) recouvrant les éléments d'étanchéité (7), il est prévu un autre couvercle (6) avec des orifices d'alimentation en gaz (11) et d'évacuation de gaz (12) et des éléments d'étanchéité (8).

Abb. I

Abb. II

Abb. III